# EUROPEAN PATENT APPLICATION

(11) **EP 1 084 875 A2**
(43) Date of publication of application: **21.03.2001**
(21) Application number: 00102027.0
(22) Date of filing: 02.02.2000
(51) Int. Cl.: B60H 1/24, B60H 1/34

(54) **A device conveying warm air and cold air used in a car**

(30) Priority: 14.09.1999 US 395914
(71) Applicant: FORMOSA SAINT JOSE CORPORATION, Taipei (TW)
(72) Inventor: Yang, Ming-Shun, Taipei (TW)
(74) Representative: Dallmeyer, Georg, Dipl.-Ing.

(57) **Abstract**

This invention, a device conveying warm air and cold air used in a car, includes a sleeve coupling (10), a vent pipe (20), and a vent connection (30). A circular sleeve at one end of the aforesaid sleeve coupling with a motor sleeve installed in the front end of the aforesaid vent pipe. A frame at the other end of the aforesaid sleeve coupling is covered on the air outlet of the car air-conduction. In the front end interior of the aforesaid vent pipe is a motor sleeve with a motor, and at the rear end of the motor sleeve is connected with a serpentine pipe, and the serpentine pipe is connected with the vent connection. By the aforesaid structure, the warm air or cold air generated from the car air-condition can be conveyed to anywhere of the car powerfully by a serpentine pipe and a motor of the device. Similarly, people can use the device to slake the intense heat or to dry their wet hair and clothes any time. This is one feature of this invention.

## Description

### BACKGROUND OF THE INVENTION:

When driving the families to the outing, people sweat inescapably, and wet the clothes, even wet the hair; hence children are easy to catch cold because of lacking air-condition to slake the intense heat, and without hair drier to dry the wet clothes and hair.

In addition, when people entering the car to slake the intense heat, the cold air is hard to reach to the people sitting at the back seat. Further, when the driver sitting on a hot car seat, even with air-condition on, the cold air can not reach to the back and bottom of the driver, thus the heat is still on.

Due to the aforesaid imperfection and inconvenience, the inventor designs a device conveying warm air and cold air used in a car. This device is mounted on the outlet of a car air-condition, conducting warm or cold air to anywhere in the car powerfully by a motor and a serpentine pipe. Using it, when people at outdoors can enjoy air-condition or dry their wet hair and clothes at any time. This is the main purpose of this invention.

In addition, the device of this invention can be integrated with a ventilating seat cushion to convey the cold or warm air generated from the car air-condition to the interior of the ventilating seat cushion powerfully by the serpentine pipe and the motor. When the cold or warm air is conveyed to the interior of the ventilating seat cushion, it will be circulated through the ventilating plate, which has myriad ventilating stubs in the interior of the seat cushion. The cold or warm air is effused out of the surface of the ventilating plate. When people sit on the ventilating seat cushion can feel cool or warm comfortably. This is the other function of this invention.

### SUMMARY OF THE INVENTION:

This invention, a device conveying warm air and cold air used in a car, includes a sleeve coupling, a vent pipe, and a vent connection. A circular sleeve at one end of the aforesaid sleeve coupling with a motor sleeve installed in the front end of the aforesaid vent pipe. A frame at the other end of the aforesaid sleeve coupling is covered on the air outlet of the car air-conduction. In the front end interior of the aforesaid vent pipe is a motor sleeve with a motor, and at the rear end of the motor sleeve is connected with a serpentine pipe,and the serpentine pipe is connected with the vent connection. By the aforesaid structure, the warm air or cold air generated from the car air-condition can be conveyed to anywhere of the car powerfully by a serpentine pipe and a motor of the device. Similarly, people can use the device to slake the intense heat or to dry their wet hair and clothes any time. This is one feature of this invention.

The other feature of this invention is to integrate the device of this invention with a ventilating seat cushion. The ventilating seat cushion is sewed with a staunch bottom plate at the bottom layer, a ventilating plate at the middle layer, and a ventilating net cloth at the top layer together. At the front edge of the bottom of the aforesaid staunch bottom plate is opened with an air inlet, and the air inlet is joined with a nozzle. There are myriad stubs and bearers formed at the upper and lower of the aforesaid ventilating plate. In the middle of the lower ventilating stub is hollowed to form an air-entering chamber, and at the two sides of the lower ventilating stub is cut to form two air-entering pores. In the middle of the upper ventilating stub is hollowed to form an air-exiting chamber, and at the two sides of the upper ventilating stub is cut to form two air-exiting pores. When the device conveying warm air and cold air of this invention from the car air-condition to the interior of the ventilating seat cushion, people sit on the ventilating seat cushion, their backs and bottoms will feel cool or warm comfortably.

### BRIEF DESCRIPTION OF THE DRAWING:

Fig. 1 is an exploded view of the device conveying warm air and old air used in a car of this invention.
Fig. 2 is a side section view of the device conveying warm air and cold air used in a car of this invention.
Fig. 3 is an exploded view of the sleeve coupling (10) and holder (40) of this invention.
Fig. 4 shows that the device of this invention is integrated with a ventilating seat cushion.
Fig. 5 is a perspective section view of the partial structure of the ventilating seat cushion (100).
Fig. 6 is a side section view of the partial structure of the ventilating seat cushion (100).
Fig. 7 is another perspective view of the device conveying warm air and cold air used in a car of this invention.
Fig. 8 and Fig. 9 are a section view and an exploded view of the assemblage of the Fig. 7.

### DETAILED DESCRIPTION:

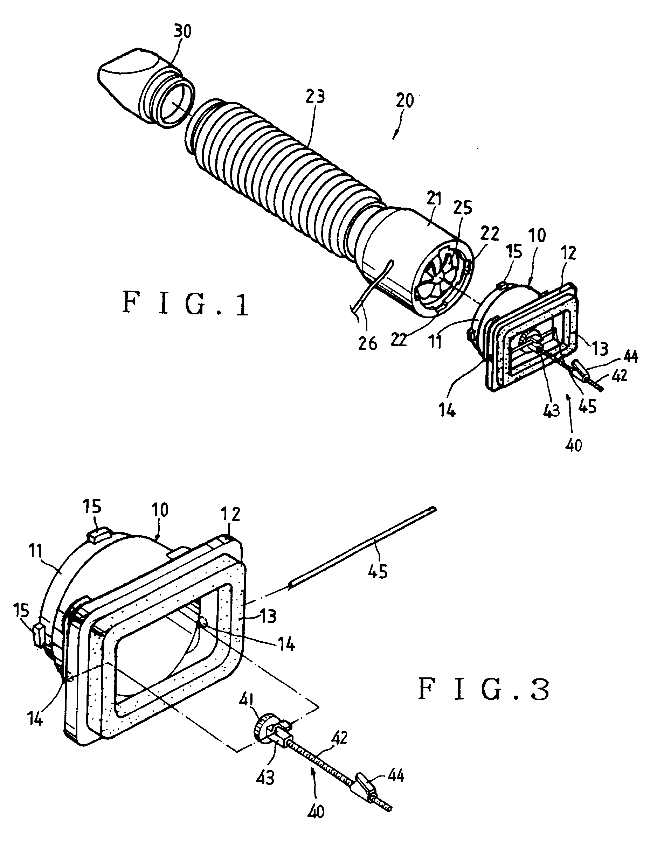

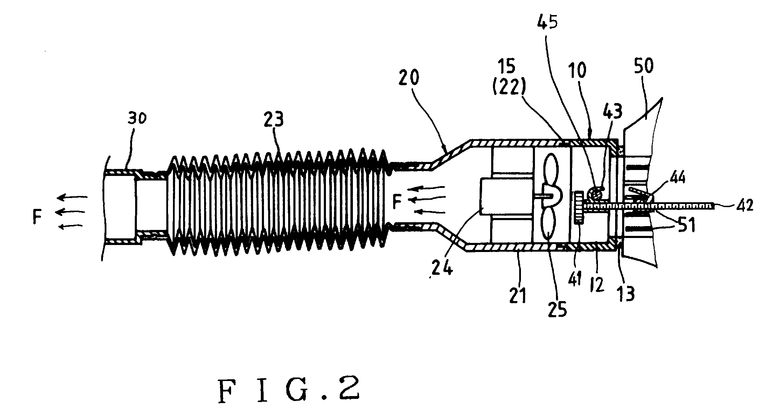

Referring to Figs. 1, 2, and 3, a device conveying warm air and cold air used in a car of the present invention is consisting of a sleeve coupling (10), a vent pipe (20), and a vent connection (30).

As figures shown that one end of the sleeve coupling (10) is formed by a circular sleeve (11), and this sleeve (11) is connected with a motor sleeve (21) installed at the front end of the afore-said vent pipe (20). The other end of the sleeve coupling (10) is formed by a frame (12). The frame (12) stuck with a rubber washer (13) is matched and covered on the air outlet (50) of a car air-condition. When the air conveyed into the sleeve coupling (10) through the air outlet (50), the rubber washer (13) can seal and prevent the air dripped out.

There is a hole (14) at each side of the frame (12) of the sleeve coupling (10), and a cotter (45) of a holder (40) of this invention can be inserted into the two holes. As figures shown that the holder (40) includes a screwed bolt (42) with a knob (41), and there are two hooks with threaded holes (43), (44) on the bolt (42) When hook the first hook with threaded hole (43) on the cotter (45) and hook the second hook with threaded hole (44) on the louver (51) of the air outlet (50), then turning the knob (41), and the bolt (42) will be turning together. By the way, the second hook (44) will be drew closer the first hook (43) and hook on the louver (51) tightly, and the holder (40) will be fixed on the louver (51) of the air outlet (50) firmly. The length of the bolt (42) of the holder (40) is applicable for different level of louver (51).

At one end of the aforesaid sleeve coupling (10) formed a circular sleeve (11),and at the outside edge of the circular sleeve (11) there are multi bulges (15). The bulges (15) can be matched and fixed with the recess (22) at the inside of the motor sleeve (21), and the sleeve coupling (10) can be fixed with the vent pipe (20) together.

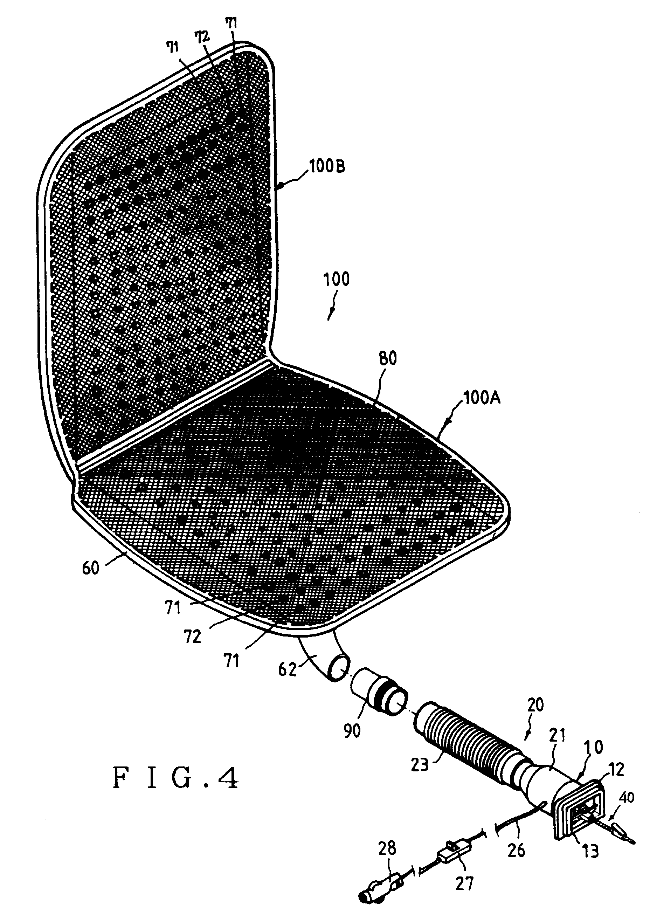

As the figure shown at the front end of the vent pipe (20) installed with a motor sleeve (21), and at the rear end of the motor sleeve (21) is connected with a twisting serpentine pipe (23). In the interior of the motor sleeve (21) is a motor (24), and there is a fan (25) installed on the turning axle of the motor. Referring to Figs 1 and 4, an electric wire (26) of the motor (24) is connected with the car power source through a switch (27) and a plug (28). When put the plug (28) in the power source, the fan (25) in the interior of the motor sleeve (21) will turn and induce the air generated from the air condition into the serpentine pipe (23).

When assembly this invention, the clamp holder (40) on the sleeve coupling (10) hooks on the louver (51) of the air outlet (50) first, the frame (12) and the rubber washer (13) of the sleeve coupling (10) cover the air outlet (50). Then the motor sleeve (21) at the front end of the vent pipe (20) is connected and fixed with the circular sleeve (11) of the sleeve coupling (10). The last step is to connect serpentine pipe (23) at the rear end of the vent pipe (20) with the vent connection (30). When the air-condition generates the cold or warm air, the motor (24) installed in the vent pipe (20) will induce the air (F) through the serpentine pipe (23) rapidly, then out of the vent connection (30) powerfully. People can take the vent connection (30) to feel the cold air or to dry their wet hair anywhere in a car. It is very convenience.

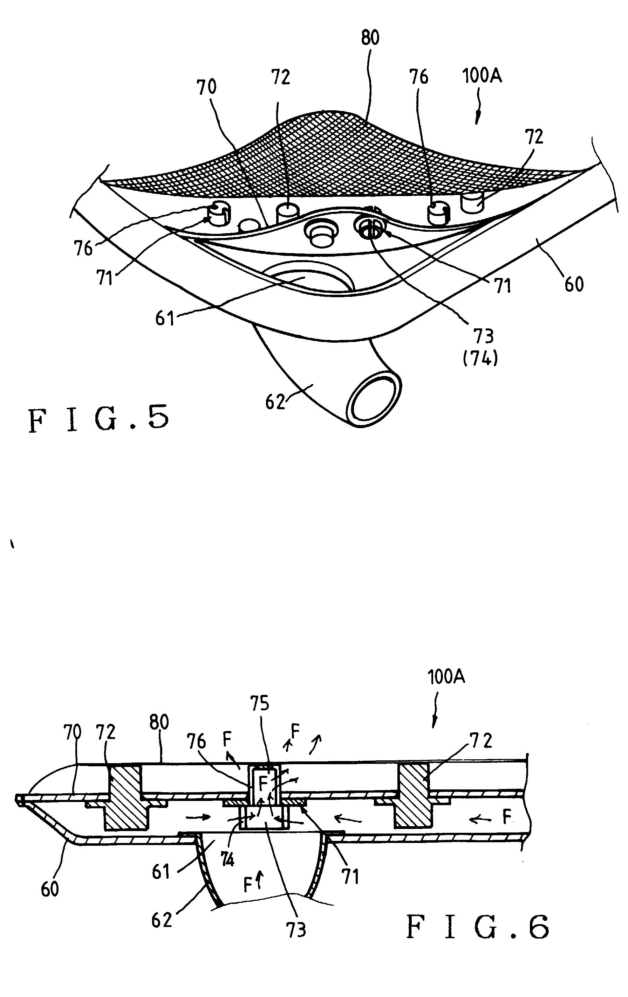

As Fig. 4 shown that the device conveying warm air and cold air of this invention can be integrated with a ventilating seat cushion (100). Referring to Figs. 5 and 6, the ventilating seat cushion (100) is formed by connecting a bottom (100A) with a back (100B). The ventilating seat cushion (100) is sewed with a staunch bottom plate (60) at the bottom layer, a ventilating plate (70) at the middle layer, and a ventilating net cloth (80) at the top layer together. At the front edge of the bottom (100A) of the aforesaid staunch bottom plate (60) is opened with an air inlet (61) and the air inlet (61) is joined with a nozzle (62). When the vent connection (30) is replaced by a transforming connector (90) as Fig. 4 shown, the transforming connector (90) can be covered and connected with the aforesaid nozzle (62) for conveying the air (F) into the interior space of the ventilating seat cushion (100) through the nozzle (62).

There are myriad ventilating stubs (71) for air (F) ventilating and myriad supporting bearers (72) for supporting the ventilating plate (70) formed at the upper and lower of the aforesaid ventilating plate. The stub (71) and the bearer (72) are arranged in equal-distance. In the middle of the lower ventilating stub (71) is hollowed to form an air-entering chamber (73), and at the two sides of the lower ventilating stub is cut to form two air-entering pores (74) for air (F) entering into the air-entering chamber (73). In the middle of the upper ventilating stub (71) is hollowed to form an air-exiting chamber (75), and at the two sides of the upper ventilating stub (71) is cut to form two air-exiting pores (76).

When turning on the air-condition, the motor (24) installed in the vent pipe (20) will induce powerful air (F) through the serpentine pipe (23),the transforming connector (90), the nozzle (62), and the air inlet (61) rapidly, and then into the interior space of the ventilating seat cushion (100). Because of the air-entering chamber (73) of the ventilating stubs (71) and the air-exiting chamber (75) are connected. The air (F) can be circulated through the air-entering pores (74) of the myriad ventilating stubs (71), the air-entering chambers (73), the air-exiting chambers (75), and through the air-exiting pores (76) effuse out of the surface of the ventilating plate (70). When people sit on the ventilating seat cushion,their backs and bottoms will feel cool or warm comfortably.

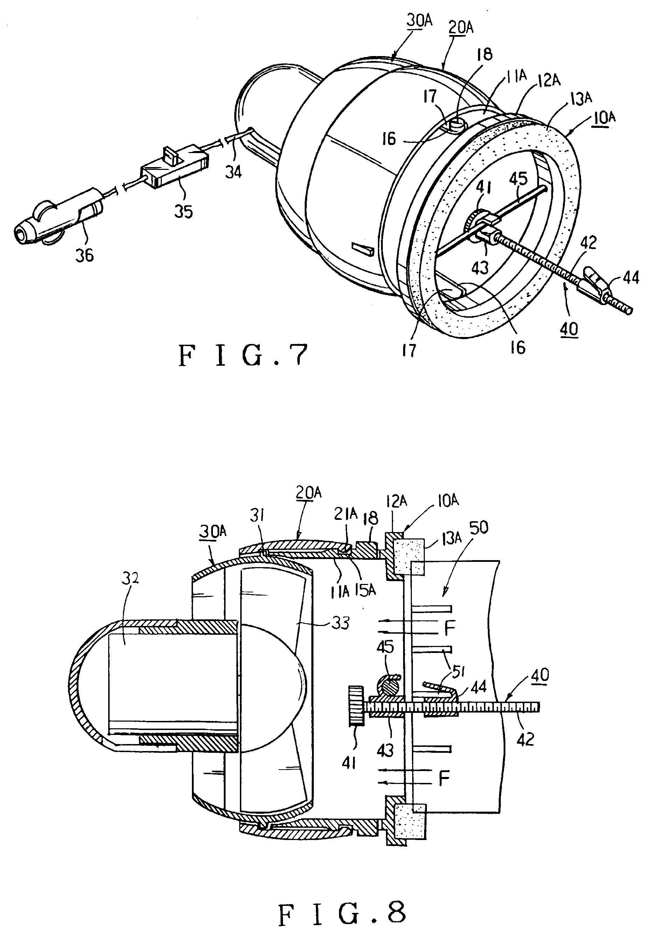

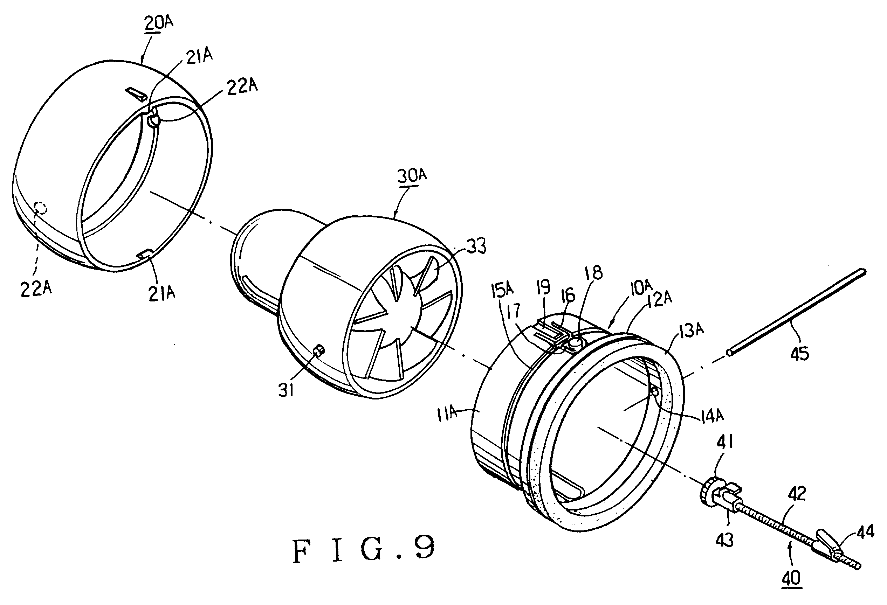

Referring to Figs. 7, 8, and 9, the other device conveying warm air and cold air used in a car of the present invention is consisting of a sleeve coupling (10A), a ring (20A), and a motor sleeve (30A).

As figures shown that one end of the sleeve coupling (10A) is formed by a circular sleeve (11A), and this sleeve (11A) is connected with the front end of the aforesaid ring (20A). The ring (20A) can gyrate on the sleeve (11A) freely. The other end of the sleeve coupling (10A) is formed by a frame (12A). The frame (12A) stuck with a rubber washer (13A) is matched and covered on the air outlet (50) of a car air-condition.

There is a hole (14A) at each side of the frame (12A) of the sleeve coupling (10A), and a cotter (45) of a holder (40) of this invention can be inserted into the two holes.

At one end of the aforesaid sleeve coupling (10A) is formed by a circular sleeve (11A), and at the outside edge of the circular sleeve (11A) there is a circular groove (15A). On the two sides of the wall of the circular sleeve (11A) are incised a U-shaped slit (16) separately. The U-shaped slit (16) are over the circular groove (15A) and formed a spring plate (17) on the inside of the U-shaped slit (16). At the end of the spring plate (17) is formed a push-button (18) for pressing the spring plate. From the two sides of the spring plate (17) bear to the end of the circular sleeve (11A) formed a guide rail (19) separately for the bulges (21A) of the ring (20A) be mounted and fixed with the circular groove (15A) of the circular sleeve (11A) easily.

The circular groove (15A) and the push-button (18) of the sleeve (11A) of the aforesaid sleeve coupling (10A) are used to mount or dismount the sleeve coupling (10A) with the ring (20A). The bulges (21A) are formed at the two sides of the front end of inside the ring (20A), which are in contraposition to the guide rail (19) of the sleeve (11A). The ring (20A) will be fixed with the sleeve by the bulges (21A) mounted with the circular groove (15A) through the guide rail (19), and the ring (20A) can gyrate on the sleeve (11A) freely through the circular groove (15A). When people press the push-button (18), it will release the limit of circular groove (15A) to the bulges (21A) and easy to dismount the ring (20A) from the sleeve (11A).

The aforesaid motor sleeve (30A) is insert into the inside of the ring (20A) before mounting the ring (20A) with the sleeve coupling (10A). Two notches (22A) are formed at two opposite sides of the rear end inside wall of the ring (20A). Two posts (31) are formed at the outside wall of the motor sleeve (30A) in contraposition to the notch (22A). The motor sleeve (30A) will be installed into the ring (20A) by mounting the post (31) into the notch (22A). The aspect of the motor sleeve (30A) can be adjustable by the post (31). In the interior of the motor sleeve (30A) is a motor (32), and there is a fan (33) installed on the turning axle of the motor. An electric wire (34) of the motor (32) is connected with the car power source through a switch (35) and a plug (36).

When assembly this invention, the holder (40) on the sleeve coupling (10A) hooks on the louver (51) of the air outlet (50) first, the frame (12A) and the rubber washer (13A) of the sleeve coupling (10A) are matched and covered on the air outlet (50) of a car air-condition. Then installing the motor sleeve (30A) into the ring (20A). The last step is to fix the ring (20A) with the sleeve (11A) of the sleeve coupling (10A) by the bulges (21A) mounted with the circular groove (15A). When the air-condition generates the cold or warm air, the motor installed in the device will induce the air (F) rapidly, then people can feel the air (F) anywhere in a car by adjusting the aspect of the motor sleeve (30A) and the ring (20A).

The device can be integrated with a twisting serpentine pipe (23) by connected the ring (20A) with the twisting serpentine pipe (23) as shown in Fig. 1. People can take the twisting serpentine pipe (23) to feel the air anywhere in a car.

From the above description, the structure of the device conveying warm air and cold air used in a car according to the present invention is convenience for people to use in the car, and is therefore practical for use and improved.

## Claims

1. The device conveying warm air and cold air used in a car is mounted on the air outlet of the car air-condition; it is not only to blow the warm and cold air to people directly by hand hold, but also can be integrated with a ventilating seat cushion; the device conveying warm and air and cold air consists of:
a sleeve coupling, at one end of the sleeve coupling formed a circular sleeve is connected with a motor sleeve installed at the front end of the following vent pipe, and a frame formed at the other end of the sleeve coupling stuck with a rubber washer is matched and covered on the air outlet of car air-condition;
a vent pipe, at the front end of the vent pipe is installed a motor sleeve, and at the rear end of the motor sleeve is connected with a twisting serpentine pipe; in the interior of the motor sleeve is installed a motor, and there is a fan installed on the turning axle of the motor;
a vent connection, by the aforesaid structure, when the air-condition generates the cold or warm air, the motor installed in the vent pipe will induce the air through the serpentine pipe rapidly, then out of the vent connection powerfully; people can take the vent connection to feel the cool or warm air; if the device conveying warm air and cold air used in a car is integrated with a ventilating seat cushion, their backs and bottoms will feel cool or warm comfortably.

2. A device conveying warm air and cold air used in a car as claimed in claim 1, wherein said that the ventilating seat cushion is formed by connecting a bottom with a back, and the ventilating seat cushion consists of:
a staunch bottom plate at the bottom layer, at the front edge of the bottom of the aforesaid staunch bottom plate is opened a air inlet and the air inlet is joined with a nozzle, and the nozzle can be connected with a transforming connector;
a ventilating plate at the middle layer, there are myriad ventilating stubs for air ventilating and myriad supporting bearers for supporting the ventilating plate formed at the upper and lower of the aforesaid ventilating plate, and the stubs and the bearers are arranged in equal-distance;
a ventilating net cloth at the top layer.

3. A device conveying warm air and cold air used in a car as claimed in claim 2, wherein said that there are myriad ventilating stubs at the aforesaid ventilating plate in the middle layer of the ventilating seat cushion, in the middle of the lower ventilating stub is hollowed to form an air-entering chamber, and at the two sides of the lower ventilating stub is cut to form two air-entering pores.

4. A device conveying warm air and cold air used in a car as claimed in claim 2, wherein said that there are myriad ventilating stubs at the aforesaid ventilating plate in the middle layer of the ventilating seat cushion, in the middle of the upper ventilating stub is hollowed to form an air-exiting chamber, and at the two sides of the upper ventilating stub is cut to form two air-exiting pores.

5. The device conveying warm air and cold air used in a car is mounted on the air outlet of the car air-condition; and the device conveying warm and air and cold air consists of:
a sleeve coupling, at one end of the sleeve coupling is formed by a circular sleeve, and at the outside edge of the circular sleeve there is a circular groove; on the two sides of the wall of the circular sleeve are incised a U-shaped slit separately which are over the circular groove and formed a spring plate on the inside of the U-shaped slit,and at the end of the spring plate is formed a push-button for pressing the spring plate; from the two sides of the spring plate bear to the end of the circular sleeve formed a guide rail separately; the other end of the sleeve coupling is formed by a frame which stuck with a rubber washer is matched and covered on the air outlet of a car air-condition; and
a ring, at the two sides of the front end of inside the ring are formed by the bulges which are in contraposition to the guide rail of the sleeve, and the ring will be fixed with the sleeve by the bulges mounted with the circular groove through the guide rail, and the ring can gyrate on the sleeve freely through the circular groove; two notches are formed at two opposite sides of the rear end inside wall of the ring for installing a motor sleeve into the ring; and
a motor sleeve, two posts are formed at the outside wall of the motor sleeve in contraposition to the notch for installing the motor sleeve into the ring, and the aspect of the motor sleeve can be adjustable by the post;in the interior of the motor sleeve is a motor, and there is a fan installed on the turning axle of the motor;
by the aforesaid structure, when the air-condition generates the cold or warm air, the motor installed in the device will induce the air rapidly, then people can feel the air anywhere in a car by adjusting the aspect of the motor sleeve and the ring.

6. A device conveying warm air and cold air used in a car as claimed in claim 1 or claim 5, wherein said that there is a hole at each side of the frame of the sleeve coupling, and a cotter of a holder of this invention can be inserted into the two holes; the holder includes a screwed bolt with a knob, and there is a first hook with threaded holes on the bolt to hook on the cotter, and there is a second hook with threaded holes on the bolt to hook on the louver of the air outlet, then turning the bolt to hook the second hook on the louver (51) tightly.

7. A device conveying warm air and cold air used in a car as claimed in claim 5, wherein said that the ring can be connected with the twisting serpentine pipe, and people can take the twisting serpentine pipe to feel the air anywhere in a car.
